# EUROPÄISCHE PATENTSCHRIFT

(11) **EP 2 100 659 B1**
(45) Veröffentlichungstag und Bekanntmachung des Hinweises auf die Patenterteilung: **15.09.2010**
(21) Anmeldenummer: 09154297.7
(22) Anmeldetag: 04.03.2009
(51) Int. Cl.: B01F 3/04, B01F 5/18, B23Q 11/10, F16N 7/30

(54) **Vorrichtung zum Erzeugen und Versprühen eines Aerosols**
Device for creating and spraying an aerosol
Dispositif de production et de pulvérisation d'un aérosol

(30) Priorität: 11.03.2008 DE 102008013540
(43) Veröffentlichungstag der Anmeldung: 16.09.2009
(73) Patentinhaber: microjet GmbH, 76187 Karlsruhe (DE)
(72) Erfinder: Link, Edmar, 76228, Karlsruhe (DE); Wendler, Thomas, 76689 Karlsdorf -Neuthard (DE); Beideck, Rudi, 76344, Eggenstein (DE)
(74) Vertreter: Liesegang, Eva

(56) Entgegenhaltungen:
- DE-B- 1 027 189
- DE-B- 1 206 863
- DE-C- 867 830
- US-A- 2 642 150

## Beschreibung

Die Erfindung betrifft eine Vorrichtung zum Erzeugen und Versprühen eines Aerosols, enthaltend Flüssigkeitspartikel in einem Gasstrom, und zum gezielten Zuführen des Aerosols zu einem Schmierort, insbesondere zur Anwendung in der Minimalmengen-Schmiertechnik, bei der minimale Mengen an Schmieröl an den Ort einer Bearbeitung, wie einen Zerspanort oder einen Umformort, zu bringen sind.

Bei einer bekannten Vorrichtung dieser Art (WO 98/28085) wird mittels einer Injektorvorrichtung, die ein Gemisch aus Gas und Flüssigkeit erzeugt, über einen Auslass ein Gas-/Flüssigkeitsstrahl auf einen Prallkörper mit strukturierter Oberfläche, wie eine gestufte Pyramide, gestrahlt und so ein Gas-/Flüssigkeitsnebel erzeugt.

Nach dem Injektorprinzip arbeitet auch eine andere bekannte Vorrichtung zum Erzeugen eines Gas-/Flüssigkeitsgemischs, wobei ein vom Injektor erzeugter Gas-/Flüssigkeitsstrahl auf die Spitze einer Pyramide gestrahlt wird, welche durch einen Antrieb in Drehung versetzt wird (DE 203 09 452 U1).

Aus der DE 12 06 863 B ist eine Vorrichtung zum Erzeugen und Versprühen eines Aerosols bekannt, die umfasst:
1.1 - ein Gefäß enthaltend einen Flüssigkeitsvorrat und einen Druckraum oberhalb des Spiegels des Flüssigkeitsvorrats,
1.2 - einen Vernebler, der oberhalb des Spiegels des Flüssigkeitsvorrates in dem Druckraum angeordnet ist und aufweist:
   1.21 eine Sprühvorrichtung mit einem Düsenkopf zum Versprühen des Aerosols,
   1.22 eine Flüssigkeitsspeiseleitung, die mit einem Ende mit dem Flüssigkeitsvorrat und mit ihrem anderen Ende mit der Sprühvorrichtung verbunden ist und eine Pumpe zum Fördern der Flüssigkeit enthält,
   1.23 eine Gasspeiseleitung, die mit einem Ende mit einer Druckgasquelle und mit ihrem anderen Ende mit der Sprühvorrichtung verbunden ist,
   1.24 mindestens eine in der Bahn der Sprühstrahlen der Sprühvorrichtung angeordnete zylindrische Lochwand mit Löchern zum Durchlassen von Flüssigkeitspartikeln vorbestimmter Größe und zum Abscheiden größerer Flüssigkeitspartikel an der Lochwand;
1.3 - eine den Druckraum mit einem Anwendungsort verbindende Aerosolleitung.
   Um Flüssigkeitspartikel in einem von einer Sprühvorrichtung, wie einer Düse, austretenden Gasstrom über eine möglichst lange Wegstrecke im Schwebezustand und damit gezielt bis zum Anwendungsort zu transportieren, sollten die Flüssigkeitsteilchen sehr klein sein, d.h. in einer Größenordnung von 1 µm oder weniger bemessen sein.

Der Erfindung liegt daher die Aufgabe zugrunde, eine Vorrichtung der eingangs beschriebenen Art zu schaffen, mit der wirtschaftlich ein Aerosol enthaltend kleinste Flüssigkeitströpfchen erzeugbar ist, das nach Versprühen und nach Transport auch über weite Entfernungen zum Anwendungsort die Konsistenz eines Aerosols beibehält.

Zur Lösung dieser Aufgabe dient Patentanspruch 1.

Mit der Vorrichtung nach der Erfindung lässt sich ein Aerosol enthaltend Flüssigkeitströpfchen kleinster Abmessungen erzeugen, die auch nach einem längeren Transportweg zum Anwendungsort, wie einem Zerspanort oder einem Kaltumformungsort, erhalten bleiben. Die Versprühung geschieht dabei ohne Relativbewegung zwischen Sprühvorrichtung und Lochwand und ohne Einsatz von elektrischer Energie allein durch die Druckenergie des Gas-/Flüssigkeitsstromes. Der Betriebsdruck des verwendeten Gases, wie Luft, lässt sich entsprechend dem jeweiligen Anwendungsfall auf Werte zwischen 1 bar und 7 bar einstellen.

Bei einer bevorzugten Ausführung der Erfindung ist die Lochwand zylindrisch ausgebildet, und die Sprühvorrichtung ist in der Mitte der Lochwand angeordnet und zum Versprühen des Aerosol rundum nach außen auf die Lochwand eingerichtet, so dass sich in dem Druckraum radial außerhalb der Lochwand ein rund um die Lochwand gleichmäßig verteilter Aerosolnebel bildet.

Die Abmessungen der in dem Nebel mitgeführten Flüssigkeitspartikel lassen sich mit Erfolg weiter dadurch verkleinern, dass in einem Abstand von der Außenseite der Lochwand eine weitere Lochwand nachgeschaltet ist.

Im praktischen Versuch hat sich eine Ausführung besonders bewährt, bei der drei zylindrische Lochwände konzentrisch um die Sprühvorrichtung herum angeordnet sind.

Die oder jede Lochwand besteht vorteilhafterweise aus einem dünnwandigen und deshalb leicht in eine gewünschte Form biegbaren Blech aus einem korrosionsfesten Metall, insbesondere aus Edelstahl. Die Löcher der Lochwand oder der Lochwände sollten vorzugsweise eine Lochabmessung von weniger als 200 µm haben.

Die Löcher der Lochwand können in einem gleichförmigen Muster angeordnet und durch Stege getrennt sein, deren Breite kleiner als die Lochdurchmesser sind. Bei einer in Versuchen erprobten Ausführung sind die Löcher rautenförmig. Die Löcher können in zueinander versetzten Reihen nach Art von Bienenwaben angeordnet und sechseckig oder auch rund geformt sein.

Bei einer bevorzugten Ausführung der Erfindung weist die Sprühvorrichtung einen Düsenkopf mit einer Mischkammer auf, in der ein Drallkörper angeordnet ist, an dessen Umfang mindestens eine schraubenlinienförmige Nut mit Ablenkfläche zur Erzeugung eines Dralls der Gas-/Flüssigkeitsströme ausgebildet ist (DE 196 08 485 C2).

Um das in der Mischkammer der Sprühvorrichtung gebildete Gas-/Flüssigkeitsgemisch möglichst gleichmäßig auf den inneren Umfang der Lochwand zu versprühen, kann die Sprühvorrichtung einen Düsenmund mit einem Kranz von Sprühöffnungen aufweisen, die auf eine Umlenkfläche eines Strahlumlenkkörpers gerichtet sind, welcher in den Düsenmund eingesetzt ist, um die austretenden Sprühstrahlen in Richtung auf die Lochwand umzulenken.

Die Erfindung ist im folgenden anhand schematischer Zeichnungen an einem Ausführungsbeispiel mit weiteren Einzelheiten näher erläutert. Es zeigen
- Fig. 1: ein Schema einer Vorrichtung zum Erzeugen und Versprühen eines Aerosols gemäß der Erfindung;
- Fig. 2: einen Axialschnitt nach der Linie II-II in Fig. 4 durch eine Sprühvorrichtung der Vor- richtung gemäß der Erfindung;
- Fig.: 3 eine perspektivische Darstellung des Axialschnittes nach Fig. 2;
- Fig. 4: eine Draufsicht auf die Sprühvorrichtung nach Fig. 2;
- Fig. 5: eine Ansicht eines Düsenkopfes der Sprühvorrichtung in größerem Maßstab;
- Fig. 6: einen Schnitt nach der Linie VI-VI in Fig. 5; und
- Fig. 7: in stark vergrößertem Maßstab eine Teilansicht auf ein Stück einer Lochwand gemäß der Erfindung mit rautenförmigen Löchern.

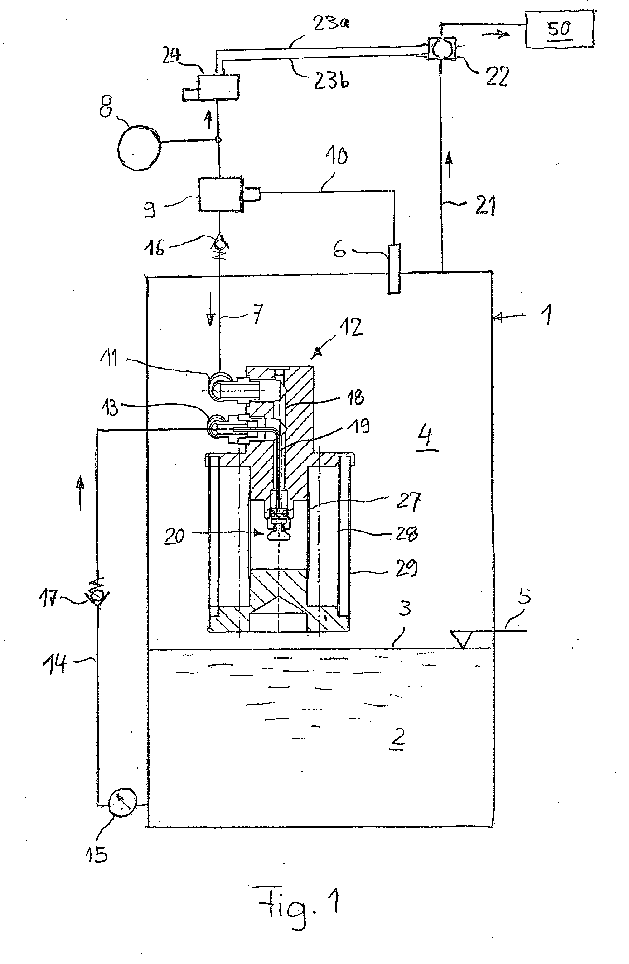

In Fig. 1 ist ein Schema der gesamten Vorrichtung zum Erzeugen und Versprühen eines Aerosols gezeigt.

Die Vorrichtung hat ein druckdichtes Gefäß 1, welches in seinem unteren Teil einen Ölvorrat 2 enthält, über dessen Spiegel 3 ein Druckraum 4 ausgebildet ist. Der Stand des Spiegels 3 wird durch einen Niveausensor 5 und der Druck im Druckraum 4 durch einen Drucksensor 6 überwacht.

In eine Druckluft-Zuleitung 7 von einer Druckquelle 8 ist ein Magnetventil 9 eingeschaltet, das über eine Drucksignalleitung 10 mit dem Drucksensor 6 verbunden ist. Die Druckluftzuleitung ist mit einem Lufteinlassstutzen 11 einer insgesamt mit der Bezugszahl 12 bezeichneten Sprühvorrichtung verbunden. Der Drucksensor 6 schaltet bei Überschreiten eines Druckmaximums bzw. bei Unterschreiten eines Druckminimums die Zufuhr von Druckluft ab bzw. ein. Der Betriebsdruck kann je nach Anwendungsfall zwischen 1 bar und 7 bar einstellbar sein.

Unterhalb des Lufteinlassstutzens 11 ist ein Öleinlassstutzen 13 vorgesehen, an den eine Ölleitung 14 angeschlossen ist. Die Ölleitung ist mit ihrem anderen Ende an den Ölvorrat 2 im Gefäß 1 angeschlossen. In die Ölleitung 14 ist eine Zahnradpumpe 15 eingebaut, welche in eingeschaltetem Zustand Öl aus dem Ölvorrat 2 über den Öleinlassstutzen 13 in die Sprühvorrichtung 12 pumpt. Der Niveausensor 5 gibt bei Unterschreiten eines vorgegebenen Niveau-Minimums ein Warnsignal "Gefäß nachfüllen" und bei Überschreiten eines Niveau-Maximums ein Signal "Ölzufuhr Stopp" ab. Lufteinlassstutzen 11 und Öleinlassstutzen sind durch die Wand des Gefäßes 1 durchgeführt, so dass die Sprühvorrichtung 12 stationär innerhalb des Gefäßes 1 gehalten sind.

In die Druckluftleitung ist zwischen dem Magnetventil 9 und dem Lufteinlassstutzen 11 ein Rückschlagventil 16 eingeschaltet. In die Ölleitung 14 ist zwischen der Zahnradpumpe 15 und dem Öleinlassstutzen 13 ein Rückschlagventil 17 eingeschaltet.

In der Sprühvorrichtung 12 ist eine vertikale Längsbohrung 18 vorgesehen. In diese Längsbohrung 18 münden der Lufteinlassstutzen 11 ebenso wie der Öleinlassstutzen 13, wobei das Öl durch ein Kapillarrohr 19 durch den Öleinlassstutzen 13 und den unteren Teil der Längsbohrung 18 zu einem Düsenkopf 20 strömt. Durch diesen Düsenkopf 20 wird ein Öl-/Luftgemisch, das im Düsenkopf 20 erzeugt ist, nach einander durch drei Lochwände 27, 28, 29in Form von drei konzentrischen zylindrischen, dünnwandigen mit einem Lochmuster perforierten Blechen radial nach außen in den Druckraum versprüht. Das so erzeugte, den Druckraum ausfüllende Aerosol enthält kleinste Öltröpfchen in gleichmäßiger Verteilung.

Aus dem Druckraum 4 ist eine Aerosolleitung 21 herausgeführt, die mittels eines Kugelhahnes 22 absperrbar und freigebbar ist. Der Kugelhahn 22 wird über Luftaktivierleitungen 23a, 23b von einem Magnetventil 24 angesteuert, das über die Luftleitung 7 mit Druckluft von der Quelle 8 betätigbar ist.

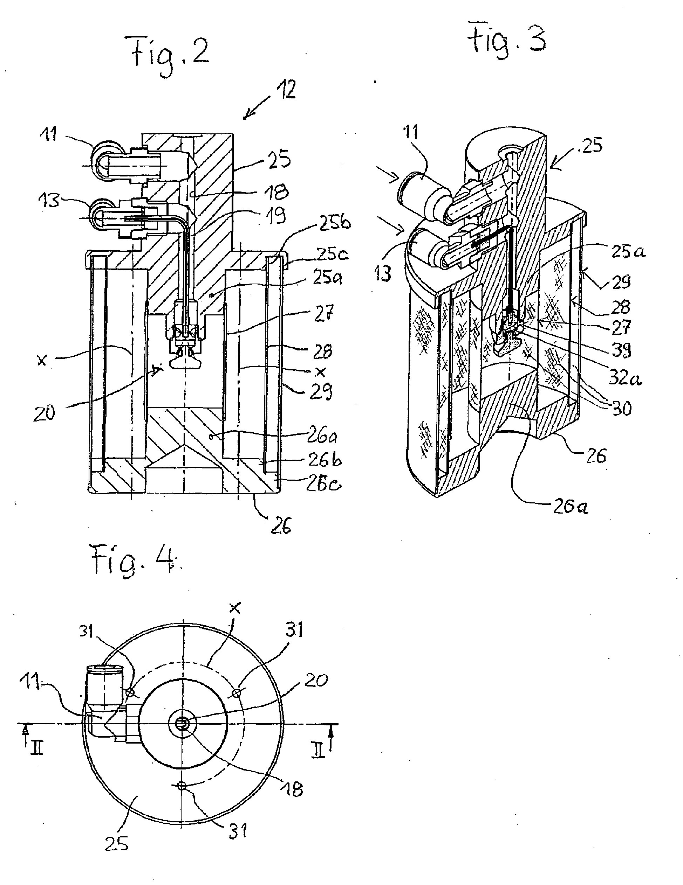

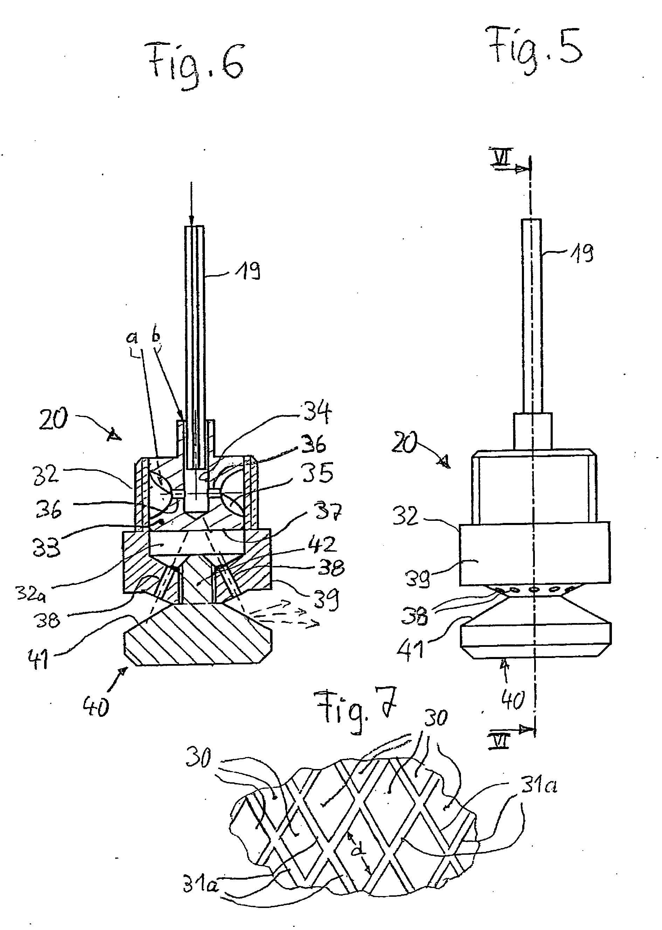

In den Fig. 2 bis 4 ist die Sprühvorrichtung 12 in größerem Maßstab getrennt von den übrigen Bestandteilen der gesamten Vorrichtung dargestellt. Hier sind die einzelnen Bestandteile der Sprühvorrichtung 12 noch deutlicher als in der Fig. 1 zu erkennen, insbesondere die drei Lochwände 27, 28, 29 mit ihren Löchern 30 (Fig. 7), die von innen über den Düsenkopf 20 mit dem darin gebildeten Öl-/Luftgemisch radial nach außen gerichtet durchsprüht werden, so dass größere Tropfen die kleinen Löcher 30 in den Lochwänden 27, 28, 29 nicht passieren können, sondern an diesen Lochwänden abgeschieden werden, während kleinere Öltröpfchen die Löcher passieren und dabei weiter verkleinert werden, so dass sie in dem schließlich im Druckraum 4 gebildeten Aerosol in Schwebezustand versetzt werden.

Aus den Fig. 2 und 3 ist ersichtlich, dass die Sprühvorrichtung ein oberes Gehäuseteil 25 enthaltend den Lufteinlassstutzen 11 und den Öleinlassstutzen 13 sowie die Längsbohrung 18 und den Düsenkopf 20 sowie ein unteres, mit dem oberen Gehäuseteil koaxiales Gehäuseteil 26 aufweist.

Die Gehäuseteile 25 und 26 haben koaxiale, entgegengesetzt gerichtete Zapfen 25a, 26a, zwischen denen die innerste Lochwand 27 gehalten ist. Ferner haben das obere Gehäuseteil und das untere Gehäuseteil radial weiter außen koaxiale Schultern 25b, 26b, auf welchen die mittlere Lochwand 28 gehalten ist. Schließlich hat das obere Gehäuseteil 25 eine äußere Krempe 25c, und das untere Gehäuseteil 26 einen äußeren Flansch 26c, wobei die äußere Lochwand 29 zwischen Krempe 25c und Flansch 26c axial fluchtend gehalten ist.

Das obere Gehäuseteil 25 und das untere Gehäuseteil 26 sind über drei durch strichpunktierte Linien angedeutete, auf einem Kranz x angeordnete Schrauben 31 miteinander verspannt und halten so die Lochwände 27, 28, 29 zwischen sich fest. Wie aus den Figuren 2 und 6 ersichtlich, ist der Düsenkopf 20 in das obere Gehäuseteil 25 fest eingeschraubt.

Der in den Fig. 5 und 6 in größerem Maßstab dargestellte Düsenkopf 20 der Sprühvorrichtung 12 hat einen Düsenkörper 32, in dem ein Drallkörper 33 aufgenommen ist. In eine zentrale Bohrung 34 dieses Drallkörpers taucht mit Spiel das innere Ende des Öl führenden Kapillarschlauches 19 ein. Im äußeren Umfang des Drallkörpers 33 ist eine schraubenlinienförmige Nut 35 eingearbeitet, die eine Ablenkfläche zur Erzeugung eines Dralls der Strömung in der Nut bildet. Die Nut 35 ist über eine Querbohrung 36 mit der zentralen Bohrung 34 verbunden, so dass sich in ihr Gas und Flüssigkeit unter Druck und Drallwirkung innig mischen. Dabei wird Druckluft in Richtung der Pfeile a und b in die Nut 35 und in das Spiel zwischen Kapillarschlauch 19 und zentraler Bohrung 34 eingeführt.

Die schraubenlinienförmige Nut 35 mündet über eine innere Stirnwand 37 des Drallkörpers 33 in die eigentliche Mischkammer 32a des Düsenkopfes 20. Von dort strömt das Öl-/Luftgemisch über einen Kranz von auf einem Kegelmantel angeordneten Ausströmöffnungen 38 in einem Düsenmund 39 des Düsenkörpers 32 auf eine stumpfwinklige Umlenkfläche 41 eines Umlenkkopfes 40, der mit einem Gewindezapfen 42 in ein Gewindeloch im Düsenmund 39 eingeschraubt ist.

Von der Umlenkfläche 41 werden die aus den Ausströmöffnungen 38 austretenden Gemischstrahlen etwa in radialer Richtung nach außen gegen die zylindrische Lochwand 27 und von dort nach Abscheiden dickerer Tropfen weiter über die Innenflächen der weiteren Lochwände 28 und 29 in den Druckraum 4 zur schließlichen Erzeugung eines Aerosols aus feinst verteilten Öltröpfchen kleinster Abmessungen in der Größenordnung von weniger als 1 µm, vorzugsweise im Bereich von 0,5µm, transportiert. Das so im Druckraum 4 erhaltene Aerosol wird schließlich über die Aerosolleitung 21 und den Kugelhahn 22 zu einem Ort der Bearbeitung, wie dem Ort einer Zerspanung oder einer Kaltumformung, über weite Entfernungen gefördert, beispielsweise über eine Wegstrecke von 30m und mehr, und zwar ohne Beeinträchtigung des Schwebezustandes der winzigen Ölpartikel in der Druckluft.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 1: Gefäß
- 2: Flüssigkeits-/Ölvorrat
- 3: Flüssigkeits-/Ölspiegel
- 4: Druckraum
- 5: Niveausensor
- 6: Drucksensor
- 7: Druckluftzuleitung
- 8: Druckluftquelle
- 9: Magnetventil
- 10: Drucksignalleitung
- 11: Lufteinlassstutzen
- 12: Sprühvorrichtung
- 13: Öleinlassstutzen
- 14: Ölleitung
- 15: Zahnradpumpe
- 16, 17: Rückschlagventil
- 18: Längsbohrung
- 19: Kapillarschlauch
- 20: Düsenkopf
- 21: Aerosolleitung
- 22: Kugelhahn
- 23a,23b: Luftaktivierleitungen
- 24: Magnetventil
- 25: oberes Gehäuseteil
- 26: unteres Gehäuseteil
- 25a,26a: Zapfen
- 25b,26b: Schultern
- 25c: Krempe
- 26c: Flansch
- 27,28,29: konzentrische Lochwände
- 30: Löcher der Lochwände
- 31: Schraube
- 31a: Steg
- 32: Düsenkörper
- 32a: Mischkammer
- 33: Drallkörper
- 34: zentrale Bohrung
- 35: schraubenlinienförmige Nut
- 36: Querbohrung
- 37: Stirnwand
- 38: Ausströmöffnungen
- 39: Düsenmund
- 40: Umlenkkopf
- 41: stumpfwinklige Umlenkfläche
- 42: Gewindezapfen
- 50: Ort der Bearbeitung

## Patentansprüche

1. Vorrichtung zum Erzeugen und Versprühen eines Aerosols enthaltend Flüssigkeitspartikel in einem Gasstrom und zum gezielten Zuführen des Aerosols zu einem Schmierort, umfassend
1.1 - ein Gefäß (1) enthaltend einen Flüssigkeitsvorrat (2) und einen Druckraum (4) oberhalb des Spiegels (3) des Flüssigkeitsvorrats,
1.2 - einen Vernebler, der oberhalb des Spiegels (3) des Flüssigkeitsvorrates (2) in dem Druckraum (4) angeordnet ist und aufweist:
1.21 eine Sprühvorrichtung (12) mit einem Düsenkopf (20) zum Versprühen des Aerosols,
1.22 eine Flüssigkeitsspeiseleitung (14), die mit einem Ende mit dem Flüssigkeitsvorrat (2) und mit ihrem anderen Ende mit der Sprühvorrichtung (12) verbunden ist und eine Pumpe (15) zum Fördern der Flüssigkeit enthält,
1.23 eine Gasspeiseleitung (7), die mit einem Ende mit einer Druckgasquelle (8) und mit ihrem anderen Ende mit der Sprühvorrichtung (20) verbunden ist, 1.24 mindestens eine in der Bahn der Sprühstrahlen der Sprühvorrichtung (12) angeordnete Lochwand (27) mit Löchern (30) eines Lochdurchmessers von maximal 200 µm zum Durchlassen von Flüssigkeitspartikeln vorbestimmter Größe und zum Abscheiden größerer Flüssigkeitspartikel an der Lochwand; wobei 1.25 die Lochwand (27) zylindrisch ausgebildet ist und der Düsenkopf (20) der Sprühvorrichtung (12) in der Mitte der Lochwand (27) angeordnet und zum Versprühen des Aerosols rundum nach außen auf die Lochwand eingerichtet ist,
1.3 - eine Aerosolleitung (21), die den Druckraum (4) mit einem durch das Aerosol zu benetzenden Ort (50) verbindet.

2. Vorrichtung nach Anspruch 1, **dadurch gekennzeichnet, dass** der Lochwand (27) mindestens eine weitere Lochwand (28) mit Abstand nachgeschaltet ist.

3. Vorrichtung nach einem der Ansprüche 1 oder 2, **dadurch gekennzeichnet, dass** drei zylindrische Lochwände (27, 28, 29) konzentrisch um den Düsenkopf (20) angeordnet sind.

4. Vorrichtung nach einem der Ansprüche 1 bis 3, **dadurch gekennzeichnet, dass** die Löcher (30) in einem gleichförmigen Muster angeordnet und durch Stege (31) getrennt sind, deren Breite kleiner als die Lochdurchmesser (d) sind.

5. Vorrichtung nach einem der Ansprüche 1 bis 4, **dadurch gekennzeichnet, dass** die Löcher (30) rautenförmig, sechseckig oder rund sind.

6. Vorrichtung nach einem der Ansprüche 1 bis 4, **dadurch gekennzeichnet, dass** die Löcher in zueinander versetzten Reihen nach Art von Bienenwaben angeordnet sind.

7. Vorrichtung nach einem der Ansprüche 1 bis 6, **dadurch gekennzeichnet, dass** der Düsenkopf (20) der Sprühvorrichtung (12) eine Mischkammer (32a) aufweist, in der ein Drallkörper (33) angeordnet ist, an dessen Umfang mindestens eine schraubenlinienförmige Nut (35) mit Ablenkfläche zur Erzeugung eines Dralls der Gas-/Flüssigkeitsströme ausgebildet ist.

8. Vorrichtung nach Anspruch 7, **dadurch gekennzeichnet, dass** der Flüssigkeitsstrom über einen Kapillarschlauch (19) in eine zentrale Bohrung (34) im Düsenkörper (32) und von dort auf die Ablenkfläche der schraubenlinienförmigen Nut (35) geführt ist.

9. Vorrichtung nach einem der Ansprüche 1 bis 8, **dadurch gekennzeichnet, dass** der Düsenkopf (20) einen Düsenmund (39) mit einem Kranz von Ausströmöffnungen (38) aufweist, die auf eine Umlenkfläche (41) eines Strahlumlenkkörpers (40) gerichtet sind, welcher in den Düsenmund (39) eingesetzt ist, um die austretenden Sprühstrahlen in Richtung auf die Lochwand (27, 28, 29) umzulenken.

10. Vorrichtung nach einem der Ansprüche 1 bis 10, **dadurch gekennzeichnet, dass** die Lochwand (27, 28, 29) aus einem Edelstahl-Blech einer Wandstärke von weniger als 0,5 mm geformt ist.

## Claims

1. An apparatus for generating and spraying an aerosol which contains liquid particles in a gas stream and for pointedly supplying the aerosol to a lubricating location, comprising:
1.1 a vessel containing a supply of liquid (2) and a pressure space (4) above the level (3) of the liquid supply,
1.2 an atomizer disposed in the pressure space (4) above the level (3) of the liquid supply (2) and comprising:
1.21 a spraying device (12) with a nozzle head (20) for spraying the aerosol,
1.22 a liquid feed line (14) connected at one end to the liquid supply (2) and at its other end to the spraying device (12) and including a pump (15) for feeding the liquid,
1.23 a gas feed line (7) connected at one end to a pressure gas source (8) and at its other end to the spraying device (12),
1.24 at least one apertured wall (27) disposed in the way of the trajectories of the spray jets from the spraying device and having holes (30) with a hole diameter of at most 200 µm for passing liquid particles of a predetermined size while separating greater liquid particles at the apertured wall, wherein
1.25 the apertured wall is cylindrical and the nozzle head (20) of the spraying device (12) is arranged in the centre of the apertured wall (27) and arranged to spray the aerosol outwardly all around against the apertured wall,
1.3 an aerosol line which connects the pressure space with a treatment location to be wetted by the aerosol.

2. The apparatus as claimed in claim 1, **characterized in that** at least one other apertured wall (28) is arranged downstream of and spaced from the apertured wall (27).

3. The apparatus as claimed in one of claims 1 or 2, **characterized in that** three cylindrical apertured walls (27, 28, 29) are arranged concentrically around the nozzle head (20).

4. The apparatus as claimed in one of claims 1 to 3, **characterized in that** the holes (30) are disposed in a regular pattern and separated from one another by webs (31) whose width is smaller than the hole diameters (d).

5. The apparatus as claimed in one of claims 1 to 4, **characterized in that** the holes (30) of the apertured wall are diamond-shaped, hexagonal, or round.

6. The apparatus as claimed in one of claims 1 to 4, **characterized in that** the holes are disposed in mutually offset rows in the manner of honeycombs.

7. The apparatus as claimed in one of claims 1 to 6, **characterized in that** the nozzle head (20) of the spraying device (12) comprises a mixing chamber (32a) with a twist body (33) arranged inside which has at least one helical groove (35) with a baffle face formed at its periphery to produce twist of the gas/liquid streams.

8. The apparatus as claimed in claim 7, **characterized in that** the liquid stream is passed through a capillary hose (19) into a central bore (34) in the nozzle member (32) and further on to the baffle face of the helical groove (35).

9. The apparatus as claimed in one of claims 1 to 8, **characterized in that** the nozzle head (20) comprises a nozzle mouth (39) formed with a ring of outlet orifices (38) directed at a deflector face (41) of a jet deflecting body (40) inserted in the nozzle mouth (39) to guide the issuing spray jets in the direction of the apertured wall (27, 28, 29).

10. The apparatus as claimed in one of claims 1 to 9, **characterized in that** the apertured wall (27, 28, 29) is formed of sheet material, especially made of stainless steel sheet having a wall thickness of less than 0.5 mm.

## Revendications

1. Dispositif de production et de pulvérisation d'un aérosol contenant des particules liquides dans un flux de gaz et d'amenée ciblée de l'aérosol à un lieu de graissage, comportant
1.1 - une boîte (1) contenant une réserve de liquide (2) et un espace de pression (4) au-dessus du niveau (3) de la réserve de liquide,
1.2 - un vaporisateur qui est disposé au-dessus du niveau (3) de la réserve de liquide (2) dans l'espace de pression (4) et présente :
1.21 un dispositif de pulvérisation (12) avec une tête de buse (20) pour la pulvérisation de l'aérosol, 1.22 une conduite d'alimentation de liquide (14) qui est reliée par une extrémité à la réserve de liquide (2) et par son autre extrémité au dispositif de pulvérisation (12) et contient une pompe (15) pour le transport du liquide,
1.23 une conduite d'alimentation de gaz (7) qui est reliée par une extrémité à une source de gaz comprimé (8) et par son autre extrémité au dispositif de pulvérisation (20),
1.24 au moins une paroi percée (27) disposée dans la trajectoire des jets de pulvérisation du dispositif de pulvérisation (12) avec des perçages (30) d'un diamètre s'élevant à 200 µm au maximum pour le passage de particules liquides de taille prédéterminée et pour la séparation de plus grandes particules liquides sur la paroi percée ;
1.25 la paroi percée (27) étant réalisée de manière cylindrique et la tête de buse (20) du dispositif de pulvérisation (12) étant disposée au milieu de la paroi percée (27) et étant conçue pour la pulvérisation de l'aérosol tout autour vers l'extérieur sur la paroi percée,
1.3 - une conduite d'aérosol (21) qui relie l'espace de pression (4) à un lieu (50) que doit humidifier l'aérosol.

2. Dispositif selon la revendication 1, **caractérisé en ce que** la paroi percée (27) est montée à distance en aval au moins d'une autre paroi percée (28).

3. Dispositif selon l'une quelconque des revendications 1 ou 2, **caractérisé en ce que** trois parois percées cylindriques (27, 28, 29) sont disposées de manière concentrique autour de la tête de buse (20).

4. Dispositif selon l'une quelconque des revendications 1 à 3, **caractérisé en ce que** les perçages (30) sont disposés dans un modèle uniforme et sont séparés par des entretoises (31), dont la largeur est plus petite que les diamètres de perçage (d).

5. Dispositif selon l'une quelconque des revendications 1 à 4, **caractérisé en ce que** les perçages (30) présentent une forme rhomboïdale, hexagonale ou ronde.

6. Dispositif selon l'une quelconque des revendications 1 à 4, **caractérisé en ce que** les perçages sont disposés en rangées décalées les unes par rapport aux autres comme des nids d'abeilles.

7. Dispositif selon l'une quelconque des revendications 1 à 6, **caractérisé en ce que** la tête de buse (20) du dispositif de pulvérisation (12) présente une chambre de mélange (32a), dans laquelle est disposé un corps de torsion (33), sur la périphérie duquel est réalisée au moins une rainure (35) en forme d'hélice avec une surface de déviation pour la génération d'une torsion des flux de gaz/de liquide.

8. Dispositif selon la revendication 7, **caractérisé en ce que** le flux de liquide est guidé par un tuyau capillaire (19) dans un perçage central (34) dans le corps de buse (32) et de là sur la surface de déviation de la rainure en forme d'hélice (35).

9. Dispositif selon l'une quelconque des revendications 1 à 8, **caractérisé en ce que** la tête de buse (20) présente un orifice de buse (39) avec une couronne d'ouvertures d'écoulement (38) qui sont dirigées vers une surface de déviation (41) d'un corps de déviation de jet (40) qui est inséré dans l'orifice de buse (39) afin de dévier les jets de pulvérisation sortant en direction de la paroi percée (27, 28, 29).

10. Dispositif selon l'une quelconque des revendications 1 à 9, **caractérisé en ce que** la paroi percée (27, 28, 29) est formée d'une tôle en acier spécial présentant une épaisseur de paroi inférieure à 0,5 mm.
